# EUROPEAN PATENT APPLICATION

(11) **EP 4 788 036 A1**
(43) Date of publication of application: **05.08.2026**
(21) Application number: 23953523.0
(22) Date of filing: 27.09.2023
(51) Int. Cl.: H04W 74/08

(54) **COMMUNICATION METHOD AND APPARATUS, AND STORAGE MEDIUM**

(71) Applicant: Beijing Xiaomi Mobile Software Co., Ltd., Beijing 100085 (CN)
(72) Inventor: LIU, Xiaofei, Beijing 100085 (CN)
(74) Representative: Gunzelmann, Rainer
(86) International application number: PCT/CN2023/122127
(87) International publication number: WO 2025/065369

(57) **Abstract**

The present disclosure relates to a communication method and apparatus, and a storage medium. The communication method is executed by a terminal and comprises: sending first information, the first information being used by a network device to determine network slice information for the terminal to trigger RA. In the described embodiment, the problem of a network device being unable to determine a network slice for a terminal to trigger RA is solved. A solution in which a terminal actively reports network slice information for triggering RA is provided, ensuring that a network device can, on the basis of the information sent by the terminal, determine network slice information for triggering RA, and ensuring the accuracy of the information, thereby ensuring the reliability of communication.

## Description

### TECHNICAL FIELD

The present disclosure relates to a field of communication technology, and specifically to a communication method, a communication apparatus, and a storage medium.

### BACKGROUND

With the rapid development of mobile communication technologies, a terminal may communicate with a network device via a network slice. Before the terminal communicates with the network device, the terminal may trigger a random access (RA) via the network slice to complete a communication connection with the network device.

### SUMMARY

The present disclosure solves a problem that a network device cannot determine a network slice for which a terminal triggers a random access (RA), and provides a solution for the terminal to actively report network slice information for which the RA is triggered, which ensures that the network device may determine the network slice information for which the RA is triggered according to information sent by the terminal, and ensures the accuracy of the information, thus ensuring the reliability of communication.

The embodiments of the present disclosure provide a communication method, a communication apparatus, and a storage medium.

According to a first aspect of the embodiments of the present disclosure, a communication method is provided. The method is performed by a terminal and includes: sending first information, in which the first information is used by a network device to determine network slice information for which the terminal triggers an RA.

According to a second aspect of the embodiments of the present disclosure, a communication method is provided. The method is performed by a network device and includes: receiving first information; and determining, based on the first information, network slice information for which a terminal triggers an RA.

According to a third aspect of the embodiments of the present disclosure, a communication method is provided, including: sending, by a terminal, first information, in which the first information is used by a network device to determine network slice information for which the terminal triggers an RA; receiving, by the network device, the first information; and determining, by the network device, based on the first information, the network slice information for which the RA is triggered by the terminal.

According to a fourth aspect of the embodiments of the present disclosure, a communication apparatus is provided, including: a transceiver module, configured to send first information, in which the first information is used by a network device to determine network slice information for which a terminal triggers an RA.

According to a fifth aspect of the embodiments of the present disclosure, a communication apparatus is provided, including: a transceiver module, configured to receive first information; and a processing module, configured to determine, based on the first information, network slice information for which a terminal triggers an RA.

According to a sixth aspect of the embodiments of the present disclosure, a communication apparatus is provided, including: one or more processors, in which the communication apparatus is configured to perform any one of the methods according to the first aspect.

According to a seventh aspect of the embodiments of the present disclosure, a communication apparatus is provided, including: one or more processors, in which the communication apparatus is configured to perform any one of the methods according to the second aspect.

According to an eighth aspect of the embodiments of the present disclosure, a communication system is provided, including: a terminal and a network device, in which the terminal is configured to implement the communication method according to the first aspect, and the network device is configured to implement the communication method according to the second aspect.

According to a ninth aspect of the embodiments of the present disclosure, a storage medium for storing instructions is provided. When the instructions are running on a communication device, the communication device is caused to perform the method according to any one of the first aspect or the second aspect.

### BRIEF DESCRIPTION OF THE DRAWINGS

The accompanying drawings are used to provide a further understanding for embodiments of the present disclosure, and constitute a part of the present disclosure. The exemplary implementations and their descriptions in the embodiments of the present disclosure are used to explain the embodiments of the present disclosure, and do not constitute a limitation to the embodiments of the present disclosure.
FIG. 1 is a schematic diagram illustrating an architecture of a communication system according to the embodiments of the present disclosure.
FIG. 2 is an interaction diagram illustrating a communication method according to the embodiments of the present disclosure.
FIG. 3A is a flowchart illustrating a communication method according to the embodiments of the present disclosure.
FIG. 3B is a flowchart illustrating a communication method according to the embodiments of the present disclosure.
FIG. 4 is a flowchart illustrating a communication method according to the embodiments of the present disclosure.
FIG. 5 is a flowchart illustrating a communication method according to the embodiments of the present disclosure.
FIG. 6 is a flowchart illustrating a communication method according to the embodiments of the present disclosure.
FIG. 7A is a block diagram illustrating a communication apparatus according to the embodiments of the present disclosure.
FIG. 7B is a block diagram illustrating a communication apparatus according to the embodiments of the present disclosure.
FIG. 8A is a block diagram illustrating a communication device according to the embodiments of the present disclosure.
FIG. 8B is a block diagram illustrating a chip according to the embodiments of the present disclosure.

### DETAILED DESCRIPTION

The present disclosure provides a communication method, a communication apparatus, and a storage medium.

According to a first aspect of the embodiments of the present disclosure, a communication method is provided. The method is performed by a terminal and includes: sending first information, in which the first information is used by a network device to determine network slice information for which the terminal triggers a random access (RA).

In the above embodiments, a problem that the network device cannot determine a network slice for which the RA is triggered by the terminal is solved, and a solution for the terminal to actively report the network slice information for which the RA is triggered is provided, which ensures that the network device may determine the network slice information for which the RA is triggered according to information sent by the terminal, and ensures the accuracy of the information, thus ensuring the reliability of communication.

In some embodiments in combination with the first aspect, in some embodiments, sending the first information includes: receiving second information and sending the first information, in which the second information is used by the network device to request the network slice information.

In the above embodiments, the network slice information for which the RA is triggered is sent based on a request from the network device, which ensures the accuracy of the first information sent by the terminal, thus ensuring the reliability of communication.

In some embodiments in combination with the first aspect, the method further includes: recording the first information.

In the above embodiments, the terminal further records the first information to ensure that the first information may be obtained for subsequent use, which improves the efficiency of sending the first information.

In some embodiments in combination with the first aspect, in some embodiments, the first information includes at least one of: time point information, in which the time point information indicates a time point at which the terminal triggers the RA or a time point at which the first information is recorded; duration information, in which the duration information indicates a duration between the time point at which the terminal triggers the RA or the time point at which the first information is recorded and a time point at which the first information is sent; configuration information, in which the configuration information includes a mapping relationship of the network slice information; or the network slice information for which the RA is triggered.

In the above embodiments, the first information includes a plurality of types of information, which expands the diversity of the first information, thus expanding ways of indicating the network slice information and improving the accuracy of the first information that is sent.

In some embodiments in combination with the first aspect, in some embodiments, the network slice information is associated with a network slice identifier triggering the RA, and the network slice information is at least one of: another network slice application server (AS) group (NSAG) other than an NSAG used for cell reselection; or network slice information used for the RA.

In the above embodiments, the network slice information is defined, which expands the ways of defining the network slice information, thus ensuring the accuracy of sending the first information.

In some embodiments in combination with the first aspect, in some embodiments, the report variable includes at least one of: an RA report variable; a radio link failure (RLF) report variable; a connection establishment failure (CEF) report variable; or a successful handover report (SHR) variable.

In the above embodiments, the first information may be recorded in a plurality of report variables, which expands recording methods, thus ensuring the accuracy of recording the first information.

In some embodiments in combination with the first aspect, in some embodiments, the first information is carried in at least one of: an Msg5 message (a type of RA message); a user equipment (UE) information response message; or a UE auxiliary information message.

In the above embodiments, the first information may be sent via a plurality of types of messages, which ensures the diversity of messages carrying the first information.

In some embodiments in combination with the first aspect, in some embodiments, the RA is a two-step RA or a four-step RA; and the RA is a contention based random access (CBRA) or a contention free random access (CFRA).

In the above embodiments, the types of the RA are defined, which expands the types of the RA triggered by the terminal, thus ensuring the accuracy of triggering the RA.

In some embodiments in combination with the first aspect, in some embodiments, the method further includes: sending third information, in which the third information indicates that the terminal supports sending the first information.

In the above embodiments, the terminal actively informs the network device of its capability, which ensures that the terminal may correctly send the first information subsequently and ensures the accuracy of sending the first information.

In some embodiments in combination with the first aspect, in some embodiments, the network slice information includes a network slice application server (AS) group identifier (NSAG ID), and the NSAG ID indicates the NSAG.

According to a second aspect of the embodiments of the present disclosure, a communication method is provided. The method is performed by a network device and includes: receiving first information; and determining, based on the first information, network slice information for which a terminal triggers triggering an RA.

In some embodiments in combination with the second aspect, in some embodiments, the first information includes: sending second information, in which the second information indicates to request the network slice information.

In some embodiments in combination with the second aspect, in some embodiments, the first information is recorded by the terminal.

In some embodiments in combination with the second aspect, in some embodiments, the first information includes at least one of: time point information, in which the time point information indicates a time point at which the terminal triggers the RA or a time point at which the first information is recorded; duration information, in which the duration information indicates a duration between the time point at which the terminal triggers the RA or the time point at which the first information is recorded and a time point at which the first information is sent; configuration information, in which the configuration information includes a mapping relationship of the network slice information; or the network slice information for which the RA is triggered.

In some embodiments in combination with the second aspect, in some embodiments, the network slice information is associated with a network slice identifier triggering the RA, and the network slice information is at least one of: another NSAG other than an NSAG used for cell reselection; or network slice information used for the RA.

In some embodiments in combination with the second aspect, in some embodiments, the first information is recorded in a report variable, and the report variable includes at least one of: an RA report variable; an RLF report variable; a CEF report variable; or an SHR variable.

In some embodiments in combination with the second aspect, in some embodiments, the first information is carried in at least one of: an Msg5 message; a UE information response message; or a UE auxiliary information message.

In some embodiments in combination with the second aspect, in some embodiments, the RA is a two-step RA or a four-step RA; and the RA is a CBRA or a CFRA.

In some embodiments in combination with the second aspect, in some embodiments, the method further includes: receiving third information, in which the third information indicates that the terminal supports sending the first information.

In some embodiments in combination with the second aspect, in some embodiments, the network slice information includes an NSAG ID, and the NSAG ID indicates an NSAG.

According to a third aspect of the embodiments of the present disclosure, a communication method is provided, including: sending, by a terminal, first information, in which the first information is used by a network device to determine network slice information for which the terminal triggers an RA; receiving, by the network device, the first information; and determining, by the network device, based on the first information, the network slice information for which the RA is triggered by the terminal.

According to a fourth aspect of the embodiments of the present disclosure, a communication apparatus is provided, including at least one of a transceiver module or a processing module, in which the terminal is configured to perform optional implementations of the first aspect and the third aspect.

According to a fifth aspect of the embodiments of the present disclosure, a communication apparatus is provided, including at least one of a transceiver module or a processing module, in which the access network device is configured to perform optional implementations of the second aspect and the third aspect.

According to a sixth aspect of the embodiments of the present disclosure, a communication apparatus is provided, including: one or more processors, in which the communication apparatus is configured to perform the method according to any one of the first aspect or the third aspect.

According to a seventh aspect of the embodiments of the present disclosure, a communication apparatus is provided, including: one or more processors, in which the communication apparatus is configured to perform the method according to any one of the second aspect or the third aspect.

According to an eighth aspect of the embodiments of the present disclosure, a storage medium for storing first information is provided. When the first information is running on a communication device, the communication device is caused to perform the method according to any one of the first aspect, the second aspect, or the third aspect.

According to a ninth aspect of the embodiments of the present disclosure, a program product is provided. When the program product is executed by a communication device, the communication device is caused to perform the method according to any one of the first aspect, the second aspect, or the third aspect.

According to a tenth aspect of the embodiments of the present disclosure, a computer program is provided. When the computer program is running on a communication device, the communication device is caused to perform the method according to any one of the first aspect, the second aspect, or the third aspect.

According to an eleventh aspect of the embodiments of the present disclosure, a chip or chip system is provided. The chip or the chip system includes a processing circuit, configured to perform the method according to any one of the first aspect, the second aspect, or the third aspect.

It may be understood that the terminal, the storage medium, the program product, the computer program, the chip, or the chip system are all used to perform the method in the embodiments of the present disclosure. Therefore, for beneficial effects they may achieve, reference may be made to the beneficial effects in the corresponding method, which will not be repeated here.

The embodiments of the present disclosure provide a communication method, a communication apparatus, and a storage medium. In some embodiments, the communication method may be used interchangeably with the terms such as information communicating method , indication method, etc., the communication apparatus may be used interchangeably with the terms such as information processing apparatus, indication apparatus, etc., and terms such as information processing system, communication system, etc., may be used interchangeably.

Embodiments of the disclosure are not exhaustive, but are only illustrative, and are not intended to be a specific limitation on the protection scope of the disclosure. In the absence of contradiction, each step in a certain embodiment may be implemented as an independent embodiment, and respective steps may be arbitrarily combined. For example, a solution after removing some steps in a certain embodiment may also be implemented as an independent embodiment, and the order of the steps in a certain embodiment may be arbitrarily exchanged. In addition, optional implementations in a certain embodiment may be arbitrarily combined. In addition, respective embodiments may be arbitrarily combined, for example, some or all steps of different embodiments may be arbitrarily combined, and a certain embodiment may be arbitrarily combined with optional implementations of other embodiments.

In various embodiments of the disclosure, unless otherwise specified or there is a logical conflict, the terms and/or descriptions between the embodiments are consistent and reference to each other may be made, and the technical features in different embodiments may be combined to form a new embodiment based on their internal logical relationships.

The terms used in the embodiments of the disclosure are only for the purpose of describing specific embodiments and are not intended to limit the disclosure.

In the embodiments of the disclosure, unless otherwise specified, elements expressed in the singular form, such as "a", "an", "the", "above", "said", "aforementioned", "this", etc., may mean "one and only one", or "one or more", "at least one", etc. For example, when articles such as "a", "an", "the" in English translation are used, the noun after the article may be understood as a singular expression or a plural expression.

In the embodiments of the present disclosure, "a plurality of" means two or more.

In some embodiments, the terms such as "at least one of", "one or more", "a plurality of", "multiple", etc. may be used interchangeably.

In some embodiments, the terms such as "at least one of A, B", "A and/or B", "in one case, A; in another case, B", "in response to one case, A; in response to another case, B", etc. may include the following technical solutions according to situations: in some embodiments, A (A is executed independently of B); in some embodiments, B (B is executed independently of A); in some embodiments, one is selected from A and B to be executed (A and B are selectively executed); in some embodiments, A and B (both A and B are executed). When there are more branches such as A, B, C, etc., the above is applicable.

In some embodiments, the descriptions such as "A or B", etc. may include the following technical solutions according to situations: in some embodiments, A (A is executed independently of B); in some embodiments, B (B is executed independently of A); in some embodiments, one is selected from A and B to be executed (A and B are selectively executed). When there are more branches such as A, B, C, etc., the above is applicable.

The prefixes such as "first" and "second" in the embodiments of the disclosure are only used to distinguish different descriptive objects, and do not constitute restrictions on the position, order, priority, quantity or content of the descriptive objects. For the statement of the descriptive objects, reference may be made to the description in the context of the claims or embodiments, and it should not constitute redundant restrictions due to the use of prefixes. For example, if the descriptive object is "field", the ordinal number before the "field" in the "first field" and the "second field" does not limit the position or order between the "fields", and the terms "first" and "second" do not limit whether the "fields" they modify are in the same message, nor do they limit the order of the "first field" and the "second field". For another example, if the descriptive object is "level", the ordinal number before the "level" in the "first level" and the "second level" does not limit the priority between the "levels". For another example, a number of descriptive objects is not limited by the ordinal number, and may be one or more. Taking the "first apparatus" as an example, a number of "apparatuses" may be one or more. In addition, the objects modified by different prefixes may be the same or different. For example, if the descriptive object is "an apparatus", then the "first apparatus" and the "second apparatus" may be the same apparatus or different apparatuses, and their types may be the same or different. For another example, if the descriptive object is "information", then the "first information" and the "second information" may be the same information or different information, and their contents may be the same or different.

In some embodiments, "including A", "containing A", "used to indicate A", and "carrying A" may be interpreted as directly carrying A or indirectly indicating A.

In some embodiments, terms such as "time/frequency", "time-frequency domain", etc., refer to a time domain and/or a frequency domain.

In some embodiments, the terms such as "in response to...", "in response to determining...", "in the case of/that...", "at the time of...", "when...", "if...", "in case of/that...", etc. may be used interchangeably.

In some embodiments, the terms such as "greater than", "greater than or equal to", "not smaller than", "more than", "more than or equal to", "not less than", "higher than", "higher than or equal to", "not lower than", and "above" may be replaced with each other, and the terms such as "smaller than", "smaller than or equal to", "not greater than", "less than", "less than or equal to", "no more than", "lower than", "lower than or equal to", "not higher than", and "below" may be used interchangeably.

In some embodiments, the apparatus or device may be interpreted as physical or virtual, and their names are not limited to the names recorded in the embodiments. In some case, it may be understood as "apparatus", "equipment", "device", "circuit", "network element", "node", "function", "unit", "section", "system", "network", "chip", "chip system", "entity", and "subject".

In some embodiments, "network" may be interpreted as a device included in a network, for example, an access network device, a core network device, etc.

In some embodiments, "access network device (AN device)" may also be called "radio access network (RAN) device", "base station (BS)", "radio base station", "fixed station", and in some embodiments may also be understood as "node", "access point", "transmission point (TP)", "reception point (RP)", "transmission/reception point (TRP)", "panel", "antenna panel", "antenna array", "cell", "macro cell", "small cell", "femto cell", "pico cell", "sector", "cell group", "serving cell", "carrier", "component carrier", "bandwidth part (BWP)", etc.

In some embodiments, "terminal" or "terminal device" may be called "user equipment (UE)", "user terminal", "mobile station (MS)", "mobile terminal (MT)", "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client", etc.

In some embodiments, obtaining data, information, etc. shall comply with laws and regulations of a country where it is located.

In some embodiments, data, information, etc. may be obtained after agreed by a user.

In addition, each element, each row, or each column in tables of embodiments of the present disclosure may be implemented as an independent embodiment. Any combination of elements, rows, or columns may also be implemented as an independent embodiment.

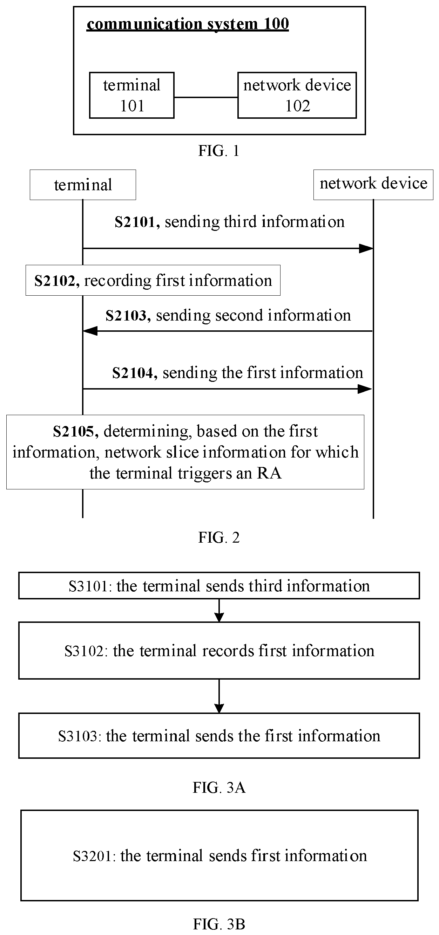

FIG. 1 is a schematic diagram illustrating an architecture of a communication system according to the embodiments of the present disclosure. As shown in FIG. 1, the method provided by the embodiments of the present disclosure may be applied to a communication system 100. The communication system may include a terminal 101 and a network device 102. It needs to be noted that the communication system 100 may also include other devices, which is not limited in the present disclosure.

In some embodiments, the terminal 101 includes, for example, at least one of a mobile phone, a wearable device, an Internet of Things device, or a car, a smart car, and a Pad, with a communication function, a computer with a wireless transceiving function, a virtual reality (VR) terminal, an augmented reality (AR) terminal, a wireless terminal in industrial control, a wireless terminal in self-driving, a wireless terminal in a remote medical surgery, a wireless terminal in a smart grid, a wireless terminal in a transportation safety, a wireless terminal in a smart city, or a wireless terminal in a smart home, etc., which is not limited herein.

In some embodiments, the network device 102 may include at least one of an access network device or a core network device.

In some embodiments, the access network device is, for example, a node or device that connects the terminal to a wireless network. The access network device may include at least one of an evolved NodeB (eNB), a next generation eNB (ng-eNB), a next generation NodeB (gNB) in a 5G communication system, a node B (NB), a home node B (HNB), a home evolved nodeB (HeNB), a wireless backhaul device, a radio network controller (RNC), a base station controller (BSC), a base transceiver station (BTS), a baseband unit (BBU), a mobile switching center, a base station in a 6G communication system, an Open RAN, a Cloud RAN, a base station in another communication system, an access node in a wireless fidelity (WiFi) system, which is not limited herein.

In some embodiments, the technical solution of the present disclosure may be applied to an architecture of the Open RAN. In this case, an interface between access network devices or within the access network device in the embodiments of the present disclosure may become an internal interface of the Open RAN. Processes and information interaction between these internal interfaces may be implemented via software or programs.

In some embodiments, the access network device may be composed of a central unit (CU) and distributed units (DUs). The CU may also be referred to as a control unit. The use of CU-DU structure allows to divide a protocol layer of the access network device, such that some of the protocol layer functions are placed in the CU for centralized control, and some or all of the remaining protocol layer functions are distributed in the DUs, and the DUs are centrally controlled by the CU, which is not limited herein.

In some embodiments, the core network device may be a device including one or more network elements, or may be a plurality of devices or device groups, each of which includes all or part of the above one or more network elements. The network elements may be virtual or physical. The core network includes, for example, at least one of an evolved packet core (EPC), a 5G core network (5GCN), or a next generation core (NGC).

It may be understood that the communication system in the embodiments of the present disclosure is for more clearly illustrating the technical solutions in the embodiments of the present disclosure and does not constitute a limitation on the technical solutions in the embodiments of the present disclosure. Those skilled in the art may understand that with the evolution of system architectures and the emergence of new service scenarios, the technical solutions in the embodiments of the present disclosure are also applicable to similar technical problems.

The following embodiments of the disclosure may be applied to the communication system 100 or part of the subjects shown in FIG. 1, but are not limited herein. The subjects shown in FIG. 1 are examples, and the communication system may include all or part of the subjects in FIG. 1, or may include other subjects than those shown in FIG. 1. The number and the form of the subjects are arbitrary. The subjects may be physical or virtual. The connection relationships between the subjects are examples. The subjects may be connected or disconnected, and the connection may be in any manner, which may be a direct connection or an indirect connection, or may be a wired connection or a wireless connection.

The embodiments of the disclosure may be applied to long term evolution (LTE), LTE-advanced (LTE-A), LTE-beyond (LTE-B), SUPER 3G, IMT-Advanced, a 4th generation mobile communication system (4G), a 5th generation mobile communication system (5G), 5G new radio (NR), future radio access (FRA), new radio access technology (RAT), new radio (NR), new radio access (NX), future generation radio access (FX), a global system for mobile communications (GSM (registered trademark)), CDMA2000, ultra mobile broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), a public land mobile network (PLMN) network, a device-to-device (D2D) system, a machine-to-machine (M2M) system, an internet of things (IoT) system, vehicle-to-everything (V2X), systems using other communication methods, and next-generation systems based on them. In addition, the plurality of systems may also be combined (for example, a combination of LTE or LTE-A and 5G, etc.) for application.

In some embodiments, the network device may configure corresponding random access channel (RACH) partitions for different features/feature combinations. Subsequently, the terminal may initiate an RA based on RACH partition resources, and the network device may then determine a corresponding feature/feature combination based on the RACH partition fed back by the terminal.

Optionally, the terminal first determines the feature or the feature combination triggering this RACH, and determines whether there is an available RACH resource corresponding to a feature/feature combination triggering an RA based on an RACH partition configuration provided by the base station. If there is no available RACH resource, a legacy RACH resource (i.e., an RACH resource that is not associated with any feature indication) is selected. If there is one available RACH resource, the RACH resource is selected. If there are a plurality of available RACH resources, resource selection is performed based on a feature priority configured by the network.

Optionally, due to limitations of an RA resource and actual network deployment, the network may not provide specific RACH partitions for all feature combinations, that is, some feature combinations may not have corresponding RACH partitions. In this case, a media access control (MAC) layer at the terminal performs an RACH partition selection based on the feature priority configured by the network, and priority may be given to ensuring that a high-priority feature may have a corresponding RACH partition. That is, the RACH partition finally selected by the terminal may not necessarily support all features/feature combinations applicable to the RACH.

In some embodiments, from the perspective of the network device, the base station will provide its supported NSAG and a configuration corresponding to the NSAG to the terminal, for slice-based cell reselection and RACH configuration enhancement. At the same time, the core network delivers to the terminal, via a non-access stratum (NAS) signaling, single network slice selection assistance information (S-NSSAI) and NSAG information that includes a corresponding relationship between S-NSSAI and NSAG, an NSAG priority, and a corresponding tracking area identity (TAI), for the terminal to map required S-NSSAI to the NSAG and perform the cell reselection and the RA based on the NSAG configuration.

From the perspective of the terminal, the terminal receives the S-NSSAI(s) and the NSAG information (including the corresponding relationship between the S-NSSAI and the NSAG, the NSAG priority, and TAI information) delivered by the core network via the NAS signaling. An NAS layer at the terminal passes one or more slices and one or more pieces of slice group information to an AS layer, for the AS layer to determine an NSAG ID used for cell selection and reselection.

FIG. 2 is an interaction diagram illustrating a communication method according to the embodiments of the present disclosure. As shown in FIG. 2, the embodiments of the present disclosure relate to a communication method, including the following steps at S2101 to S2105.

At S2101, the terminal sends third information.

In some embodiments, the network device receives the third information.

In some embodiments, the third information indicates that the terminal supports sending the first information. In some embodiments, the third information indicates that the terminal supports sending network slice information for which the RA is triggered. In some embodiments, the third information indicates that the terminal has a capability to support sending the first information. In some embodiments, the third information indicates that the terminal has a first capability, in which the first capability indicates that the terminal supports sending the first information, or, the first capability indicates that the terminal supports sending the network slice information for which the RA is triggered.

In some embodiments, the name of the third information is not limited. For example, it may be indication information, capability information, capability indication information, etc.

For example, the terminal sends capability indication information, in which the capability indication information indicates that the terminal supports sending the network slice information, which is used by the network device to determine that the RA is triggered, or, the capability indication information indicates that the terminal has a first capability, in which the first capability indicates that the terminal supports sending the network slice information, which is used by the network device to determine that the RA is triggered.

In some embodiments, the first information is used by the network device to determine network slice information for which the terminal triggers an RA. In some embodiments, the first information indicates network slice information for which the terminal triggers the RA.

In some embodiments, the name of the first information is not limited. For example, it may be indication information, reporting information, or other information, etc.

It needs to be noted that S2101 is an optional step. In another embodiment, S2101 may not be performed.

At S2102, the terminal records first information.

In some embodiments, after triggering the RA, the terminal may record the network slice information for which the RA is triggered, and subsequently send the first information.

In some embodiments, the terminal recording the first information may also include storing the first information, or caching the first information, or saving the first information, which is not limited in the embodiments of the present disclosure.

In some embodiments, the first information is recorded in a report variable. In some embodiments, the report variable includes RA information. Or, it may also be understood that the report variable refers to any report variable that includes the RA information.

Optionally, the report variable includes at least one of: an RA report variable; an RLF report variable; a CEF report variable; or an SHR variable.

That is to say, in the embodiments of the present disclosure, the terminal may record the first information in the RA report variable, or in the RLF report variable, or in the CEF report variable, or in the SHR variable.

In some embodiments, the first information includes at least one of the following items (1) to (4).
(1) Time point information, in which the time point information indicates a time point at which the terminal triggers the RA or a time point at which the first information is recorded.

It needs to be noted that when the terminal records the first information, in which the first information includes the time point information.

In some embodiments, the time point information refers to a moment when the terminal triggers the RA or a moment when the first information is recorded.

In some embodiments, the time point information is an absolute time point. Or, the time point information may also be represented by an offset value, that is, a certain time point is set as a starting point, and a moment after the offset value is the time point information.

It needs to be noted that the embodiments of the present disclosure are all explained as examples. The time point information may also be a time point in other forms.

In some embodiments, after receiving the time point information included in the first information, the network device may determine a corresponding network configuration based on the time point information, and then determine the network slice information for which the RA is triggered by the terminal based on the network configuration.

(2) Duration information, in which the duration information indicates a duration between the time point at which the terminal triggers the RA or the time point at which the first information is recorded and a time point at which the first information is sent.

In some embodiments, the network device may determine a network configuration corresponding to a time point when the RA is triggered or the first information is recorded based on the duration information, and then determine the network slice information for which the RA is triggered based on the network configuration.

(3) Configuration information, in which the configuration information includes a mapping relationship of the network slice information.

In some embodiments, after receiving the configuration information, the network device may determine the network slice information for which the RA is triggered based on the mapping relationship included in the configuration information.

In some embodiments, the mapping relationship includes a corresponding relationship between the network slice information and an RA resource.

In some embodiments, the mapping relationship includes related mapping information of an NSAG, including at least one of: a mapping relationship between an NSAG ID and an S-NSSAI ID, effective area information of the mapping relationship, or usage information of the mapping relationship.

(4) The network slice information for which the RA is triggered.

In some embodiments, the terminal directly reports the network slice information for which the RA is triggered.

In some embodiments, the network device may determine the network slice information for which the RA is triggered based on the network slice information for the RA.

In some embodiments, the terminal not only sends the network slice information triggering the RA, but also sends a mapping relationship of the network slice information included in the configuration information to the network device. The network device reversely deduces and determines a corresponding mapping relationship based on the mapping relationship, and then determines or optimizes an RA configuration corresponding to S-NSSAI based on the determined mapping relationship and the network slice information.

In some embodiments, the terminal not only sends the network slice information for which the RA is triggered, but also sends the time point information and/or the duration information to the network device. The network device reversely deduces and determines a corresponding mapping relationship based on the time point information and/or the duration information, and then determines or optimizes the RA configuration corresponding to S-NSSAI based on the determined mapping relationship and the network slice information.

It needs to be noted that the network slice information in the embodiments of the present disclosure at least includes an NSAG ID, and the NSAG ID indicates an NSAG.

In some embodiments, the network slice information is associated with a network slice identifier triggering the RA, and the network slice information is at least one of:
(1) The network slice information is another NSAG other than an NSAG used for cell reselection.
   In some embodiments, the network slice information is not included in SIB16 and/or a dedicated signaling.
(2) The network slice information is network slice information used for the RA.

It needs to be noted that the embodiments of the present disclosure involve an RA, and the RA includes various situations. In some embodiments, the RA includes a two-step RA or a four-step RA; and the RA is a CBRA or a CFRA.

In some embodiments, the NSAG is associated with S-NSSAI triggering the RA, and the NSAG is not included in SIB16 and/or a dedicated signaling.

In some embodiments, the NSAG is associated with S-NSSAI triggering the RA, and the NSAG is included in SIB1.

In some embodiments, the NSAG is associated with S-NSSAI triggering the RA, and the NSAG is included in the SIB1 but not included in the SIB16 and/or the dedicated signaling.

At S2103, the network device sends second information.

In some embodiments, the second information indicates a request for the network slice information. In some embodiments, the name of the second information is not limited, for example, it may be request information, indication information, etc.

In the embodiments of the present disclosure, the network device may actively request the terminal to send the network slice information for which the RA is triggered. Therefore, the network device may send the second information to request the network slice information via the second information.

In some embodiments, the network device receives third information, and determines that the terminal supports sending the network slice information for which the RA is triggered. Therefore, when the network device needs the first information, the network device sends the second information to request the first information.

At S2104, the terminal sends the first information.

In some embodiments, the network device receives the first information.

In some embodiments, the terminal receives the second information, and determines that the network device requests the network slice information based on the second information. Therefore, after receiving the second information, the terminal sends the first information.

It needs to be noted that the embodiments of the present disclosure are described by taking an example where, at S2103 to S2104, the network device requests the terminal to send the first information, which is used by the network device to determine the network slice information. In another embodiment, the terminal may also actively send the first information. Or, it may be understood that S2103 is not performed, but S2104 is directly performed.

In some embodiments, the first information is carried in at least one of the following items (1) to (3).

### (1) An Msg5 message.

In some embodiments, each time a terminal enters a radio resource control (RRC) connected state, the terminal sends the first information via the Msg5 message, or sends availability indication information of the first information via the Msg5 message. The availability indication information may reuse existing report availability indication information, or may be independently indicated. For example, the terminal sends the availability indication information in the Msg5 message, and the availability indication information indicates that the terminal has the first information.

### (2) A UE information response message.

In some embodiments, after receiving an information request (UEInformationRequest) sent by the network device, the terminal reports the first information to the network via the UE information response message (UEinformationresponse).

In some embodiments, the UEinformationresponse refers to an existing report reporting procedure.

### (3) A UE auxiliary information message.

It needs to be noted that, in the embodiments of the present disclosure, the method in which the terminal sends the first information may also include that, a new message is redefined, and the first information is sent via the newly defined message.

At S2105, the network device determines, based on the first information, network slice information for which the terminal triggers an RA.

In some embodiments, names are not limited to those specified in the embodiments. The terms such as "information", "message", "signal", "signaling", "report", "configuration", "indication", "instruction", "command", "channel", "parameter", "domain", "field", "symbol", "symbol/code element", "codebook", "codeword", "codepoint", "bit", "data", "program", "chip", etc., may be used interchangeably.

In some embodiments, the terms such as "uplink", "physical uplink", etc. may be used interchangeably; terms such as "downlink", "physical downlink", etc. may be used interchangeably; and terms such as "side", "sidelink", "sidelink communication", "direct link", "direct communication", "direct link communication" etc. may be used interchangeably.

In some embodiments, the terms such as "acquire", "obtain", "get", "receive", "transmit", "bidirectional transmission", "send and/or receive" may be used interchangeably, and they may be interpreted as receiving from another entity, obtaining from a protocol, obtaining from a high layer, obtaining via processing by itself, autonomously implementing, and other meanings.

In some embodiments, the terms such as "send", "transmit", "report", "deliver", "transmit", "bidirectional transmission", "send and/or receive" may be used interchangeably.

In some embodiments, the terms such as "moment", "time point", "time", "time position" may be used interchangeably, and the terms such as "duration", "time period", "time window", "window", "time" may be used interchangeably.

In some embodiments, terms such as "certain", "predetermined", "preset", "set", "indicated", "a/an", "any", "first", etc. may be used interchangeably. "Certain A", "predetermined A", "preset A", "set A", "indicated A", "a/an A", "any A", "first A" may be interpreted as A predefined in a protocol, etc., or as A obtained via setting, configuration, or indication, etc., or as a certain A, a/an A, any A, or a first A, etc., which is not limited herein.

The communication method in the embodiments of the present disclosure may include at least one of S2101 to S2105. For example, S2101 may be implemented as an independent embodiment, S2102 may be implemented as an independent embodiment, S2103 may be implemented as an independent embodiment, S2104 may be implemented as an independent embodiment, S2105 may be implemented as an independent embodiment, the combination of S2101 and S2102 may be implemented as an independent embodiment, the combination of S2103 and S2104 may be implemented as an independent embodiment, the combination of S2101, S2102, and S2103 may be implemented as an independent embodiment, and the combination of S2103, S2104, and S2105 may be implemented as an independent embodiment, which is not limited herein.

In some embodiments, S2101 is optional, and one or more of these steps may be omitted or replaced in different embodiments.

In some embodiments, S2102 is optional, and one or more of these steps may be omitted or replaced in different embodiments.

In some embodiments, S2103 is optional, and one or more of these steps may be omitted or replaced in different embodiments.

In some embodiments, S2101 and S2102 are optional, and one or more of these steps may be omitted or replaced in different embodiments.

In some embodiments, S2101 and S2103 are optional, and one or more of these steps may be omitted or replaced in different embodiments.

In some embodiments, S2102 and S2103 are optional, and one or more of these steps may be omitted or replaced in different embodiments.

In some embodiments, S2101, S2102, and S2103 are optional, and one or more of these steps may be omitted or replaced in different embodiments.

In some embodiments, reference may be made to other optional implementations recorded before or after the description corresponding to FIG. 2.

FIG. 3A is a flowchart illustrating a communication method according to the embodiments of the present disclosure, applied to a terminal. As shown in FIG. 3A, the embodiments of the present disclosure relate to a communication method, including the following steps at S3101 to S3103.

At S3101, the terminal sends third information.

For the optional implementations of S3101, reference may be made to optional implementations of S2101 in FIG. 2 and other related parts in the embodiments related to FIG. 2, which are not repeated here.

At S3102, the terminal records first information.

For the optional implementations of S3102, reference may be made to optional implementations of S2102 in FIG. 2 and other related parts in the embodiments related to FIG. 2, which are not repeated here.

At S3103, the terminal sends the first information.

For the optional implementations of S3103, reference may be made to optional implementations of S2104 in FIG. 2 and other related parts in the embodiments related to FIG. 2, which are not repeated here.

The communication method in the embodiments of the present disclosure may include at least one of S3101 to S3103. For example, S3101 may be implemented as an independent embodiment, S3102 may be implemented as an independent embodiment, S3103 may be implemented as an independent embodiment, or at least two steps may be combined, which is not limited herein.

In some embodiments, S3101 and S3102 are optional, S3101 and S3103 are optional, S3102 and S3103 are optional, S3101 is optional, S3102 is optional, S3103 is optional, and one or more of these steps may be omitted or replaced in different embodiments, which is not limited herein.

FIG. 3B is a flowchart illustrating a communication method according to the embodiments of the present disclosure, applied to a terminal. As shown in FIG. 3B, the embodiments of the present disclosure relate to a communication method, including the following step at S3201.

At S3201, the terminal sends first information.

For the optional implementations of S3201, reference may be made to S2104 in FIG. 2, S3103 in FIG. 3A, and other related parts in the embodiments related to FIG. 2 and FIG. 3A, which are not repeated here.

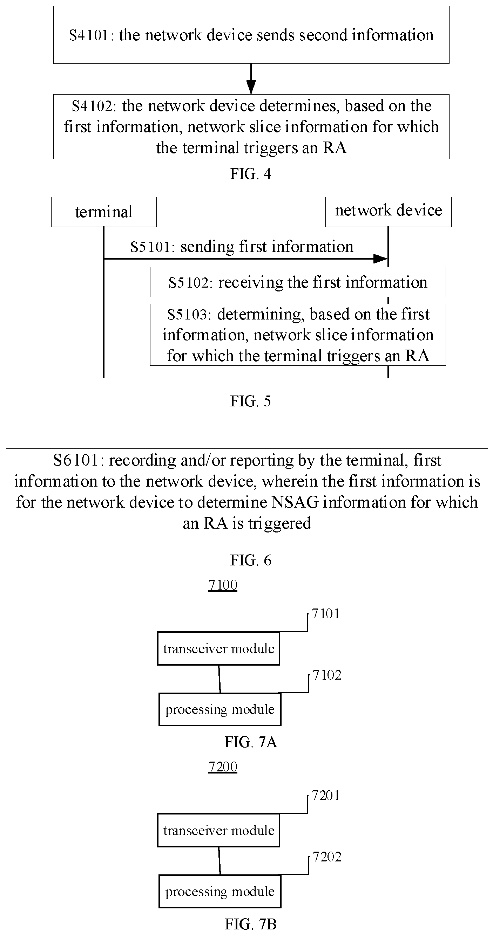

FIG. 4 is a flowchart illustrating a communication method according to the embodiments of the present disclosure, applied to a network device. As shown in FIG. 4, the embodiments of the present disclosure relate to a communication method, including the following steps at S4101 to S4102.

At S4101, the network device sends second information.

For the optional implementations of S4101, reference may be made to S2103 in FIG. 2 and other related parts in the embodiments related to FIG. 2, which are not repeated here.

At S4102, the network device determines, based on the first information, network slice information for which the terminal triggers an RA.

For the optional implementations of S4102, reference may be made to S2105 in FIG. 2 and other related parts in the embodiments related to FIG. 2, which are not repeated here.

In some embodiments, the method includes: sending second information, in which the second information indicates a request for the network slice information.

In some embodiments, the first information is recorded by the terminal.

In some embodiments, the first information includes at least one of: time point information, in which the time point information indicates a time point at which the terminal triggers the RA or a time point at which the first information is recorded; duration information, in which the duration information indicates a duration between the time point at which the terminal triggers the RA or the time point at which the first information is recorded and a time point at which the first information is sent; configuration information, in which the configuration information includes a mapping relationship of the network slice information; or the network slice information for which the RA is triggered.

In some embodiments, the network slice information is associated with a network slice identifier triggering the RA, and the network slice information is at least one of: another NSAG other than an NSAG used for cell reselection; or network slice information used for the RA.

In some embodiments, the first information is recorded in a report variable, and the report variable includes at least one of: an RA report variable; an RLF report variable; a CEF report variable; or an SHR variable.

In some embodiments, the first information is carried in at least one of: an Msg5 message; a UE information response message; or a UE auxiliary information message.

In some embodiments, the RA is a two-step RA or a four-step RA; and the RA is a CBRA or a CFRA.

In some embodiments, the method further includes: receiving third information, in which the third information indicates that the terminal supports sending the first information.

In some embodiments, the network slice information includes an NSAG ID, and the NSAG ID indicates an NSAG.

FIG. 5 is a flowchart illustrating a communication method according to the embodiments of the present disclosure. As shown in FIG. 5, the embodiments of the present disclosure relate to a communication method, including the following steps at S5101 to S5103.

At S5101, the terminal sends first information.

At S5102, the network device receives the first information.

At S5103, the network device determines, based on the first information, network slice information for which the terminal triggers an RA.

For the optional implementations of S5101, reference may be made to S2104 in FIG. 2, S3103 in FIG. 3A, and other related parts in the embodiments related to FIG. 2 and FIG. 3A, which are not repeated here.

For the optional implementations of S5102, reference may be made to S2104 in FIG. 2, S4101 in FIG. 4A, and other related parts in the embodiments related to FIG. 2 and FIG. 4A, which are not repeated here.

For the optional implementations of S5103, reference may be made to S2105 in FIG. 2, S4102 in FIG. 4A, and other related parts in the embodiments related to FIG. 2 and FIG. 4A, which are not repeated here.

In some embodiments, the method may include the methods in the embodiments on a communication system side, a terminal side, a network device side, etc., which are not repeated here.

FIG. 6 is a flowchart illustrating a communication method according to the embodiments of the present disclosure. As shown in FIG. 6, the embodiments of the present disclosure relate to a communication method, including the following step at S6101.

At S6101, the terminal records first information and/or reports the first information to the network device, in which the first information is used by the network device to determine NSAG information for which an RA is triggered.

In a possible implementation, the terminal records the first information into a report variable, and reports the first information to the network. Optionally, the reporting step may include that, in response to a request from the network side, the terminal reports the first information to the network.

In a possible implementation, the terminal directly reports the first information to the network. Optionally, the reporting step may include that, in response to a request from the network side, the terminal reports the first information to the network.

In some embodiments, the first information includes at least one of:
a) Time point information, in which the time point information includes, but is not limited to, a time point at which a terminal slice triggers the RA or a time point at which recording of a report is triggered.
   In a possible implementation, the terminal reports an absolute time point when the RA is triggered or recording of the report to the network side is triggered. The network side determines based on the time point a network configuration corresponding to the time point, and then determines NSAG information for which the RA is triggered, based on NSAG information reported by the terminal and the corresponding network configuration.
b) Duration information, in which the duration information includes, but is not limited to, a duration from triggering the RA or triggering recording of information to reporting the information.
   In a possible implementation, the terminal reports to the network side the duration information from triggering the RA or triggering recording of the information to reporting the information. The network side determines based on the duration information a network configuration corresponding to a time when RA is triggered or recording of the information is triggered, and then determines NSAG information for which the RA is triggered, based on NSAG information reported by the terminal and the corresponding network configuration.
c) First network configuration information, in which the first network configuration information includes, but is not limited to, NSAG mapping relationship information.
   In a possible implementation, the terminal reports network configuration information including an NSAG mapping relationship to the network. The network side determines NSAG information for which the RA is triggered, based on the NSAG information reported by the terminal and the NSAG mapping relationship information.
d) NSAG information (e.g., NSAG ID) used for the RA.

In a possible implementation, the terminal reports the NSAG information used for the RA to the network. The network determines the NSAG information for which the RA is triggered based on the information. Furthermore, the terminal may report to the network side, c) network configuration information including the NSAG mapping relationship, or, a) b) time information. The network side reversely check the mapping relationship based on the mapping relationship or based on the time information, and optimizes an RA configuration corresponding to S-NSSAI based on the NSAG information and the checked mapping relationship.

In some embodiments, the NSAG is associated with S-NSSAI triggering the RA, and satisfies at least one of:
a) The NSAG being not included in SIB16 and/or a dedicated signaling; or
b) The NSAG being included in SIB1.

In some embodiments, the report variable includes any report variable carrying RA information, the report variable including but not limited to at least one of:
a) An RA report variable;
b) An RLF report variable;
c) A CEF report variable; or
d) An SHR variable.

In some embodiments, the terminal reports the first information via, including but not limited to, at least one of:

### a) An Msg5 message.

In a possible implementation, each time a terminal enters an RRC connected state, the terminal sends the first information via the Msg5 message, or sends availability indication information of the first information via the Msg5 message. The availability indication information may reuse the existing report availability indication information, or may be independently indicated.

### b) A UE information response message.

In a possible implementation, the reporting may reuse the existing report reporting procedure, or may be newly defined. After receiving the UEinformationrequest sent by the network side, the terminal reports the first information to the network via the UEinformationresponse.

### c) A UE auxiliary information message.

In some embodiments, the RA includes a two-step RA or a four-step RA, and at least includes a CBRA.

In some embodiments, optionally, the terminal reports capability indication information, indicating that the terminal supports reporting of the first information.

In the embodiments of the present disclosure, part or all of the steps and their optional implementations may be arbitrarily combined with part or all of the steps in other embodiments, and may also be arbitrarily combined with optional implementations of other embodiments.

The embodiments of the present disclosure also provide an apparatus for implementing any one of the above methods. For example, an apparatus is provided, including units or modules for implementing the steps performed by the terminal in any one of the above methods. For another example, another apparatus is provided, including units or modules for implementing steps performed by the network device (for example, an access network device, a core network function node, a core network device, etc.) in any one of the above methods.

It should be understood that the division of units or modules in the above apparatuses is merely a division of logical functions. In actual implementations, the units may be fully or partially integrated into a single physical entity or may be physically separated. In addition, the units or modules in the apparatus may be implemented in the form of software called by a processor. For example, the apparatus includes a processor, which is connected to a memory for storing instructions. The processor calls the instructions stored in the memory to implement any one of the above methods or the functions of the units or modules in the apparatus. The processor may be a general-purpose processor, such as a central processing unit (CPU) or a microprocessor, and the memory may be internal or external to the apparatus. Or, the units or modules in the apparatus may be implemented in the form of a hardware circuit. Some or all of the functions of the units or modules may be realized via a design of the hardware circuit. The hardware circuit may be understood as one or more processors. For example, in an implementation, the hardware circuit is an application-specific integrated circuit (ASIC). Functions of some or all of the units are realized by designing logical relationships among components in the circuit. In another implementation, the hardware circuit may be implemented using a programmable logic device (PLD). Taking a field programmable gate array (FPGA) as an example, the FPGA may include a large number of logic gate circuits, and connection relationships among the logic gate circuits are configured by configuration files to realize the functions of some or all of the units or modules. All units or modules of the above apparatus may be fully implemented in the form of software called by the processor, or fully implemented in a form of the hardware circuit, or partially implemented in the form of software called by the processor invoking and the remaining part implemented in the form of the hardware circuit.

In the embodiments of the disclosure, the processor is a circuit with a signal processing capability. In an implementation, the processor may be a circuit with a capability to read and run instructions, such as a CPU, a microprocessor, a graphics processing unit (GPU) (which may be understood as a type of the microprocessor), a digital signal processor (DSP), etc. In another implementation, the processor may implement some functions via a logical relationship of hardware circuits. The logical relationship of the hardware circuit is fixed or reconstructed, for example, a hardware circuit implemented by the ASIC or the PLD, such as the FPGA. In the reconstructed hardware circuit, a process that the processor loads the profiles to implement a hardware circuit configuration may be understood as a process that the processor loads the instructions to implement the functions of some or all of the units or modules. Furthermore, it may also be a hardware circuit designed for artificial intelligence, which may be understood as a type of ASIC, such as a neural network processing unit (NPU), a tensor processing unit (TPU), a deep learning processing unit (DPU), etc.

FIG. 7A is a block diagram illustrating a communication apparatus according to the embodiments of the present disclosure. As shown in FIG. 7A, a communication apparatus 7100 may include at least one of: a transceiver module 7101 or a processing module 7102. In some embodiments, the transceiver module 7101 is configured to send first information, in which the first information is used by a network device to determine network slice information for which a terminal triggers an RA. Optionally, the transceiver module 7101 is configured to perform at least one of communication steps such as sending and/or receiving performed by the terminal in any one of the above methods (for example, S2101, which is not limited herein), which is not repeated here. Optionally, the processing module is configured to perform at least one of other steps performed by the terminal in any one of the above methods, which is not repeated here.

Optionally, the processing module 7102 is configured to perform at least one of communication steps such as processing performed by the terminal in any one of the above methods, which is not repeated here.

FIG. 7B is a block diagram illustrating a communication apparatus according to the embodiments of the present disclosure. As shown in FIG. 7B, a communication apparatus 7200 may include at least one of: a transceiver module 7201 or a processing module 7202. In some embodiments, the transceiver module 7201 is configured to receive first information, in which the first information is used by a network device to determine network slice information for which the terminal triggers an RA; and the processing module 7202 is configured to determine, based on the first information, network slice information for which a terminal triggers an RA. Optionally, the transceiver module is configured to perform at least one of communication steps such as sending and/or receiving performed by the network device in any one of the above methods (for example, S2102, which is not limited herein), which is not repeated here.

Optionally, the processing module 7202 is configured to perform at least one of communication steps such as processing performed by the network device in any one of the above methods, which is not repeated here.

In some embodiments, the transceiver module may include a sending module and/or a receiving module. The sending module and the receiving module may be separate or integrated together. Optionally, the transceiver module may be interchanged with a transceiver.

In some embodiments, the processing module may be one module or may include a plurality of sub-modules. Optionally, the plurality of sub-modules respectively perform all or part of the steps required to be performed by the processing module. Optionally, the processing module may be interchanged with a processor.

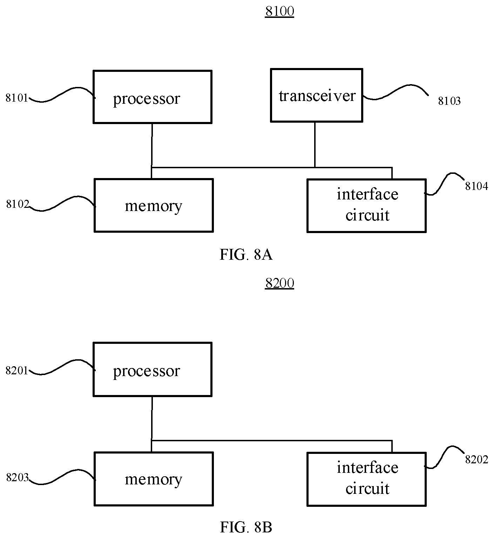

FIG. 8A is a block diagram illustrating a communication device 8100 according to the embodiments of the present disclosure. The communication device 8100 may be a network device (e.g., an access network device, a core network device, etc.), or a terminal (e.g., a UE, etc.), or a chip, a chip system, or a processor, etc., that supports the network device to implement any one of the above methods, or a chip, a chip system, or a processor, etc., that supports the terminal to implement any one of the above methods. The communication device 8100 may be used to implement the method in the above method embodiments. For details, reference may be made to the description in the above method embodiments.

As shown in FIG. 8A, the communication device 8100 may include one or more processors 8101. The processor 8101 may be a general-purpose processor or a special-purpose processor. For example, it may be a baseband processor or a central processing unit. The baseband processor may be used to process communication protocols and communication data, and the central processing unit may be used to control communication devices (such as base stations, baseband chips, terminals, terminal chips, DU or CU, etc.) to execute computer programs and process computer program data. The communication device 8100 is used to perform any one of the above methods.

In some embodiments, the communication device 8100 further includes one or more memories 8102 for storing instructions. Optionally, all or part of the memories 8102 may also be located outside the communication device 8100.

In some embodiments, the communication device 8100 further includes one or more transceivers 8103. When the communication device 8100 includes one or more transceivers 8103, the transceiver 8103 performs at least one of communication steps such as sending and/or receiving in the above methods (for example, S2101, S2102, S2103, S2104, which is not limited herein).

In some embodiments, the transceiver may include a receiver and/or a transmitter, which may be separate or integrated. Optionally, the terms such as transceiver, transceiver unit, transceiver machine, transceiver circuit, etc. may be used interchangeably; the terms such as transmitter, transmitting unit, transmitter machine, transmitting circuit, etc. may be used interchangeably; and the terms such as receiver, receiving unit, receiver machine, receiving circuit, etc. may be used interchangeably.

In some embodiments, the communication device 8100 may include one or more interface circuits 8104. Optionally, the interface circuit 8104 is connected to the memory 8102. The interface circuit 8104 may be used to receive signals from the memory 8102 or other devices, and may be used to send the signals to the memory 8102 or other devices. For example, the interface circuit 8104 may read instructions stored in the memory 8102 and send the instructions to the processor 8101.

The communication device 8100 in the description of the above embodiments may be a network device or a terminal, but the scope of the communication device 8100 described in the disclosure is not limited herein, and the structure of the communication device 8100 may not be limited by FIG. 8A. The communication device may be a stand-alone device or may be part of a larger device. For example, the communication device may be: (1) a stand-alone IC, a chip, a chip system or a subsystem; (2) a collection of ICs including one or more ICs. In some examples, the collection of ICs may also include storage components for storing data and computer programs; (3) an ASIC, such as a modem; (4) a module that may be embedded within other devices; (5) a receiver, a terminal, a smart terminal, a cellular phone, a wireless device, a handheld machine, a mobile unit, an in-vehicle device, a network device, a cloud device, an artificial intelligence device, and the like; and (6) others.

FIG. 8B is a block diagram illustrating a chip 8200 according to the embodiments of the present disclosure. For the case where the communication device 8100 may be a chip or a chip system, reference may be made to the block diagram of the chip 8200 shown in FIG. 8B, which is not limited herein.

The chip 8200 includes one or more processors 8201. The chip 8200 is used to perform any one of the above methods.

In some embodiments, the chip 8200 further includes one or more interface circuits 8202. Optionally, the interface circuit 8202 is connected to a memory 8203. The interface circuit 8202 may be used to receive signals from the memory 8203 or other devices, and the interface circuit 8202 may be used to send the signals to the memory 8203 or other devices. For example, the interface circuit 8202 may read instructions stored in the memory 8203 and send the instructions to the processor 8201.

In some embodiments, the interface circuit 8202 performs at least one of communication steps such as sending and/or receiving in the above methods, and the processor 8201 performs at least one of other steps.

In some embodiments, the terms such as interface circuit, interface, transceiver pin, transceiver, etc., may be used interchangeably.

In some embodiments, the chip 8200 further includes one or more memories 8203 for storing instructions. Optionally, all or part of the memories 8203 may be located outside the chip 8200.

The present disclosure also provides a storage medium for storing instructions. When the instructions are running on the communication device 8100, the communication device 8100 is caused to implement any one of the above methods. Optionally, the storage medium is an electronic storage medium. Optionally, the storage medium is a computer-readable storage medium, but it is not limited herein, and it may also be a storage medium readable by other devices. Optionally, the storage medium may be a non-transitory storage medium, but it is not limited herein, and it may also be a transitory storage medium.

The present disclosure also provides a program product. When the program product is executed by the communication device 8100, the communication device 8100 is caused to implement any one of the above methods. Optionally, the program product is a computer program product.

The present disclosure also provides a computer program. When the computer program is executed on a computer, the computer is caused to implement any one of the above methods.

## Claims

1. A communication method, performed by a terminal, comprising:
sending first information, wherein the first information is used by a network device to determine network slice information for which the terminal triggers a random access (RA).

2. The method of claim 1, wherein sending the first information comprises:
receiving second information and sending the first information, wherein the second information is used by the network device to request the network slice information.

3. The method of claim 1 or 2, further comprising:
recording the first information.

4. The method of any one of claims 1 to 3, wherein the first information comprises at least one of:
time point information, wherein the time point information indicates a time point at which the terminal triggers the RA or a time point at which the first information is recorded;
duration information, wherein the duration information indicates a duration between the time point at which the terminal triggers the RA or the time point at which the first information is recorded and a time point at which the first information is sent;
configuration information, wherein the configuration information comprises a mapping relationship of the network slice information; or
the network slice information for which the RA is triggered.

5. The method of any one of claims 1 to 4, wherein the network slice information is associated with a network slice identifier triggering the RA, and the network slice information is at least one of:
another network slice application server (AS) group (NSAG) other than an NSAG used for cell reselection; or
network slice information used for the RA.

6. The method of claim 3, wherein the first information is recorded in a report variable, and the report variable comprises at least one of:
an RA report variable;
a radio link failure (RLF) report variable;
a connection establishment failure (CEF) report variable; or
a successful handover report (SHR) variable.

7. The method of any one of claims 1 to 6, wherein the first information is carried in at least one of:
an Msg5 message;
a user equipment (UE) information response message; or
a UE auxiliary information message.

8. The method of any one of claims 1 to 7, wherein the RA is a two-step RA or a four-step RA; and the RA is a contention based random access (CBRA) or a contention free random access (CFRA).

9. The method of any one of claims 1 to 8, further comprising:
sending third information, wherein the third information indicates that the terminal supports sending the first information.

10. The method of any one of claims 1 to 9, wherein the network slice information comprises a network slice application server (AS) group identifier (NSAG ID), and the NSAG ID indicates an NSAG.

11. A communication method, performed by a network device, comprising:
receiving first information; and
determining, based on the first information, network slice information for which a terminal triggers a random access (RA).

12. The method of claim 11, wherein the first information comprises:
sending second information, wherein the second information indicates to request the network slice information.

13. The method of claim 11 or 12, wherein the first information is recorded by the terminal.

14. The method of any one of claims 11 to 13, wherein the first information comprises at least one of:
time point information, wherein the time point information indicates a time point at which the terminal triggers the RA or a time point at which the first information is recorded;
duration information, wherein the duration information indicates a duration between the time point at which the terminal triggers the RA or the time point at which the first information is recorded and a time point at which the first information is sent;
configuration information, wherein the configuration information comprises a mapping relationship of the network slice information; or
the network slice information for which the RA is triggered.

15. The method of any one of claims 11 to 14, wherein the network slice information is associated with a network slice identifier triggering the RA, and the network slice information is at least one of:
another network slice application server (AS) group (NSAG) other than an NSAG used for cell reselection; or
network slice information used for the RA.

16. The method of claim 13, wherein the first information is recorded in a report variable, and the report variable comprises at least one of:
an RA report variable;
a radio link failure (RLF) report variable;
a connection establishment failure (CEF) report variable; or
a successful handover report (SHR) variable.

17. The method of any one of claims 11 to 16, wherein the first information is carried in at least one of:
an Msg5 message;
a user equipment (UE) information response message; or
a UE auxiliary information message.

18. The method of any one of claims 11 to 17, wherein the RA is a two-step RA or a four-step RA; and
the RA is a contention based random access (CBRA) or a contention free random access (CFRA).

19. The method of any one of claims 11 to 18, further comprising:
receiving third information, wherein the third information indicates that the terminal supports sending the first information.

20. The method of any one of claims 11 to 19, wherein the network slice information comprises a network slice application server (AS) group identifier (NSAG ID), and the NSAG ID indicates an NSAG.

21. A communication method, comprising:
sending, by a terminal, first information, wherein the first information is used by a network device to determine network slice information for which the terminal triggers a random access (RA);
receiving, by the network device, the first information; and
determining, by the network device, based on the first information, the network slice information for which the RA is triggered by the terminal.

22. A communication apparatus, comprising:
a transceiver module, configured to send first information, wherein the first information is used by a network device to determine network slice information for which a terminal triggers a random access (RA).

23. A communication apparatus, comprising:
a transceiver module, configured to receive first information; and
a processing module, configured to determine, based on the first information, network slice information for which a terminal triggers a random access (RA).

24. A communication device, comprising:
one or more processors,
wherein the one or more processors are configured to perform the communication method of any one of claims 1 to 10.

25. A communication device, comprising:
one or more processors,
wherein the one or more processors are configured to perform the communication method of any one of claims 11 to 20.

26. A communication system, comprising a terminal and a network device, wherein the terminal is configured to implement the communication method of any one of claims 1 to 10, and the network device is configured to implement the communication method of any one of claims 11 to 20.

27. A storage medium for storing instructions that, when running on a communication device, cause the communication device to perform the communication method of any one of claims 1 to 10 or claims 11 to 20.
